# EUROPEAN PATENT APPLICATION

(11) **EP 1 681 884 A1**
(43) Date of publication of application: **19.07.2006**
(21) Application number: 06000302.7
(22) Date of filing: 09.01.2006
(51) Int. Cl.: H04Q 7/34

(54) **Apparatus and method for checking performance of wireless data network**

(30) Priority: 13.01.2005 KR 2005003407
(71) Applicant: LG Electronics Inc., Yongdungpo-Gu Seoul (KR)
(72) Inventor: Kang, Jong-Kook, Bucheon Gyeonggi-Do (KR)
(74) Representative: Katérle, Axel

(57) **Abstract**

An apparatus for checking performance of a wireless data network includes an FTP (File Transport Protocol) module coupled to a test server based on predetermined user information and transmitting and receiving data to and from the coupled test server; a controller for analyzing a test result obtained from transmission and reception of data and outputting the analyzed test result; and an output unit for displaying the outputted test result through a display unit.

## Description

### BACKGROUND OF THE INVENTION

### Field of the Invention

The present invention relates to a wireless data network and, more particularly, to an apparatus and method for checking performance of a wireless data network capable of checking performance of a wireless data network in real time without using a performance checking device.

### DESCRIPTION OF THE RELATED ART

In general, a mobile communication terminal refers to a device with mobility, such as a mobile phone, a personal digital assistant (PDA), or the like, which has such characteristics of being light in weight and small in size such that it can be carried along in the hands of users. However, mobile communication terminals may have shortcomings in that they may be limited in range by their own power or by the coverage provided by a network on which they operate, or they may suffer from interference or other problems that affect their performance.

Recently, the mobile communication terminals provide diverse services such as mobile banking allowing a user to access the Internet for bank-related transactions such as depositing and withdrawing money, mobile games played on-line, movies watched in real time, and so on. Various types of products adopting the merits of the mobile phone, such as the PDA and notebook computer, are under development.

Mobile communication terminals employ various protocols (e.g., PPP, IP, TCP, etc.) to implement various applications such as a Web browser or the like. The protocols are the core of network software, defining a type of a message exchanged between two or more communication entities, a meaning, transmission order, message transmission and reception and operations to be performed for a multitude of other events.

The mobile communication terminal uses a communication port to be connected with a personal computer (PC) to transmit or receive data, and in general, a UART (Universal Asynchronous Receiver Transmitter) is used as the communication port. The UART, a unit for processing asynchronous serial communication, converts serial bit data into a certain unit of parallel bit data or certain unit of parallel data into serial bit data.

Thus, by connecting the UART port of the mobile communication terminal and a communication port of the PC with an RS-232E cable, a user can check performance (e.g., a transmission rate, etc.) of an application, such as a Web browser for the wireless Internet, through the PC using various tools. That is, an extra performance checking unit such as the PC is required.

As mentioned above, in the method for checking performance of a wireless data network in accordance with the related art, the performance of a wireless data network is checked through the PC using various tools by connecting the UART port of the mobile communication terminal and the communication port of the PC with the RS-232 cable. Thus, it is not possible to check performance of the wireless data network in real time without using a performance checking device.

### SUMMARY OF THE INVENTION

In one embodiment, the present invention may provide an apparatus and method for checking performance of a wireless data network capable of detecting performance of a wireless data network in real time without using a performance checking device, by installing an FTP (File Transport Protocol) module and displaying a performance test result through the FTP.

Accordingly, there may be provided an apparatus for checking performance of a wireless data network including an FTP module to couple to a test server based on predetermined user information and to transmit and receive data to and from the coupled test server; a controller to analyze the transmitted and received data and to output a test result calculated by the controller; and an output unit to display the outputted test result through a display unit.

To achieve at least these advantages in whole or in parts, there may be further provided a method for checking performance of a wireless network including driving an FTP module of a mobile communication terminal; coupling to a test server based on predetermined user information through the driven FTP module; transmitting and receiving data to and from the coupled test server and calculating a test result based on the transmitted and received data; and displaying the calculated test result on a display unit.

Additional advantages and features of the invention will be set forth in part in the description which follows and in part will become apparent to those having ordinary skill in the art upon examination of the following or may be learned from practice of the invention. The advantages and features of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 is a block diagram showing an apparatus for checking performance of a wireless data network in accordance with an exemplary embodiment of the present invention;
Figure 2 is a flow chart of a method for checking performance of the wireless data network in accordance with an exemplary embodiment of the present invention;
Figure 3 illustrates an engineer screen for checking user information in accordance with an exemplary embodiment of the present invention; and
Figures 4A and 4B illustrate an engineer screen for displaying a test result in accordance with an exemplary embodiment of the present invention.

### DETAILED DESCRIPTION OF THE PREFERRED EMBODIMENTS

An apparatus and method for checking performance of a wireless data network capable of detecting performance of a wireless data network in real time without using a performance checking device, by installing an FTP (File Transport Protocol) module and displaying a performance test result through the FTP, in accordance with an exemplary embodiment of the present invention will be described with reference to the accompanying drawings.

The apparatus and method for checking performance of a wireless data network in accordance with an exemplary embodiment of the present invention can be applied to a mobile communication terminal, which may employ various application programs for transmitting and receiving data as well as the FTP module.

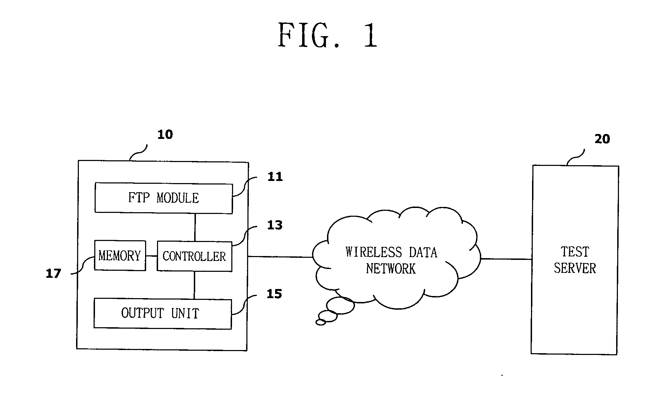

Figure 1 is a block diagram showing an apparatus for checking performance of a wireless data network in accordance with an exemplary embodiment of the present invention.

As shown in Figure 1, the apparatus for checking performance of a wireless data network may include: an FTP module 11 coupled to a test server 20 based on predetermined user information and transmitting and receiving data to and from the coupled test server 20; a controller 13 for analyzing a test result obtained from transmission and reception of data and outputting the analyzed test result; and an output unit 15 for displaying the outputted test result through a display unit (not shown).

The predetermined user information may include an IP (Internet Protocol) address of the test server 20, an ID and a password of a user corresponding to the test server 20, a size of a file for transmission, and a transmission method of the file (e.g., download or upload), which may be stored in a memory 17.

The mobile communication terminal 10 including the FTP module 11, the controller 13 and the output unit 15 transmits and receives data to and from the test server 20 through the wireless data network and may check performance of the wireless data network based on the transmitted and received data.

A method for checking performance of the wireless data network in accordance with an embodiment of the present invention will now be described.

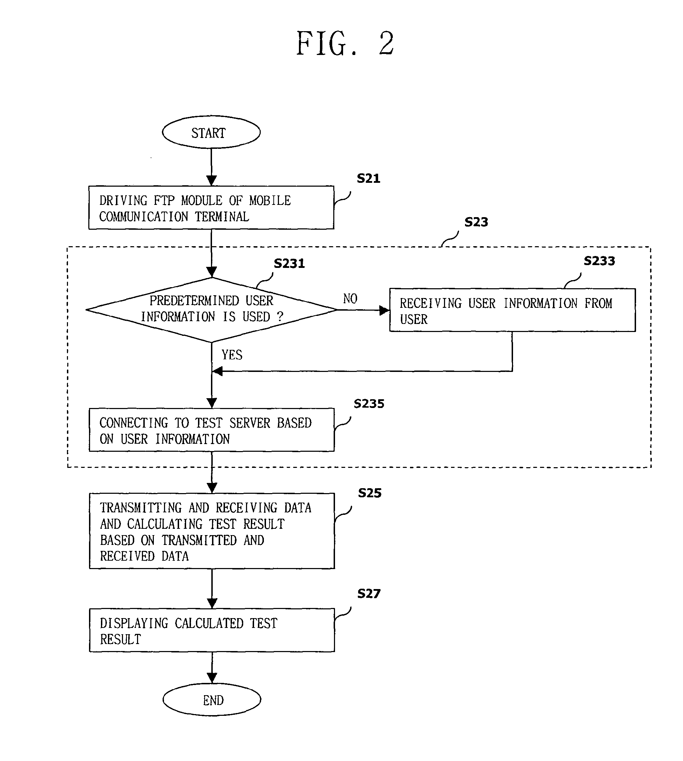

Figure 2 is a flow chart of a method for checking performance of the wireless data network in accordance an exemplary embodiment of the present invention.

As shown in Figure 2, a method for checking performance of the wireless data network may include: driving an FTP module installed in a mobile communication terminal (step S21); connecting to a test server based on predetermined user information through the driven FTP module (S23); transmitting and receiving data to and from the connected test server and calculating a test result based on the transmitted and received data (step S25); and displaying the calculated test result on a display unit (step S27).

The step (S23) of connecting to the test server may include: checking whether to use the predetermined user information (step S231); connecting to the test server based on the predetermined user information if the predetermined user information is used (step S235); and receiving user information from a user and connecting to a corresponding test server based on the received user information, if the predetermined user information is not used (step S233).

The method for checking performance of the wireless data network in accordance with an exemplary embodiment of the present invention will be described in detail as follows.

The mobile communication terminal 10 has a predetermined screen (referred to hereinafter as an 'engineer screen') to display various parameter values related to the mobile communication terminal 10 that may be used by users, including developers, of the mobile communication terminal. The engineer screen may be displayed on the mobile communication terminal 10 by a predetermined code value.

Thus, when the user selects a menu for driving the FTP module 11 displayed on the engineer screen of the mobile communication terminal 10 (step S21), the mobile communication terminal 10 may be connected to the test server 20 based on the predetermined user information through the driven FTP module 11 (step S23). Namely, the mobile communication terminal 10 may process data that is intended to determine whether the user has elected to use the predetermined user information (step S231).

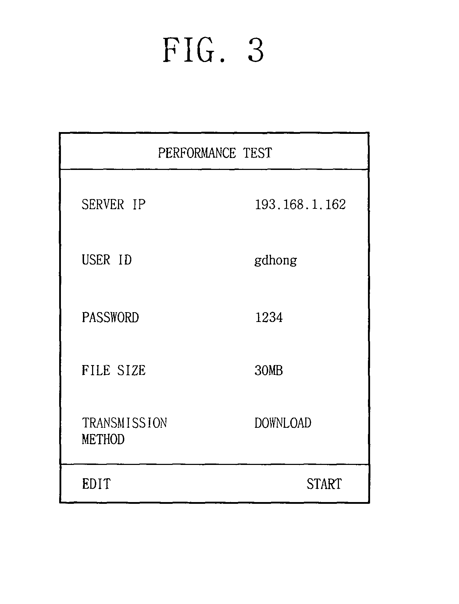

The engineer screen for checking the user information will be described with reference to Figure 3.

Figure 3 illustrates an engineer screen for checking user information in accordance with an exemplary embodiment of the present invention.

As shown in the exemplary embodiment of Figure 3, the predetermined user information, namely, an IP address (193.168.1.162) of the test server 20, a user ID (gdhong) corresponding to the test server, a password (1234), a size (30MB) of a file to be transmitted, and a transmission method of the file (download), are displayed on the engineer screen of the mobile communication terminal 10, and the predetermined user information can be changed through an edit function.

When the user uses the predetermined user information, the mobile communication terminal 10 may be coupled to the test server 20 based on the predetermined user information (step S235), and when the user does not use the predetermined user information, the mobile communication terminal 10 may receive user information from the user (step S233) and may be connected to the corresponding test server 20 based on the received user information (step S235).

The mobile communication terminal 10 transmits and receives data through the coupled test server 20, calculates test results (e.g., transmission time, an average transmission rate, a reference transmission rate, maximum/minimum transmission rate, etc.) based on the transmitted and received data (step S25), and displays the calculated test results on the engineer screen of the mobile communication terminal 10 (step S27). Herein, in one embodiment, the display unit is an LCD (Liquid Crystal Display).

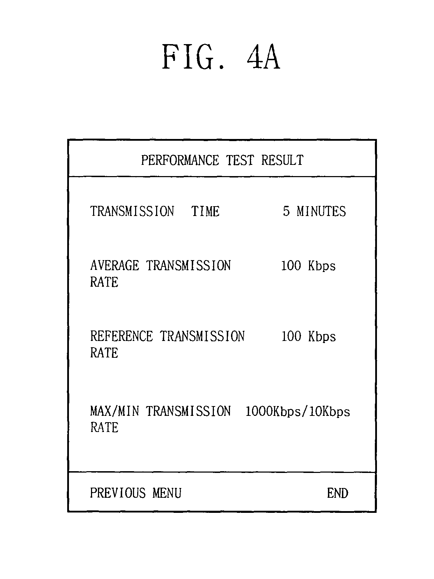

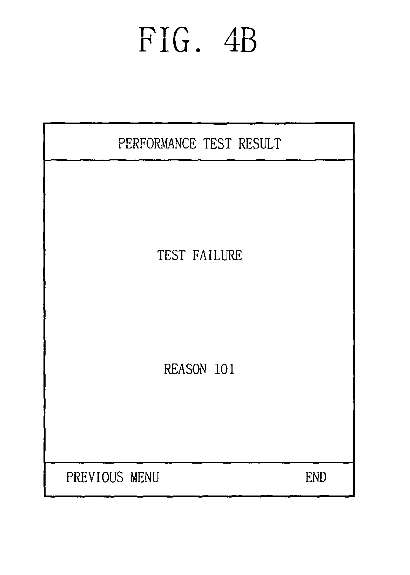

The displayed test results will be described with reference to Figures 4A and 4B as follows.

Figures 4A and 4B illustrate an engineer screen for displaying a test result in accordance with an exemplary embodiment of the present invention.

As shown in the exemplary embodiment of Figure 4A, the test results calculated based on the transmitted and received data through the FTP module, namely, the transmission time (5 minutes) when data is normally transmitted and received, an average transmission rate (100Kbps), a reference transmission rate (100Kbps), maximum/minimum transmission rates (100OKbps/10Kbps), are displayed on the engineer screen of the mobile communication terminal 10. As shown in the exemplary embodiment of Figure 4B, when data transmission and reception have failed, a message of test failure and a test failure reason are displayed. In the exemplary embodiment of Figure 4B, the test failure reason is identified by the number "101," although other descriptive alphanumeric characters or strings of characters are acceptable.

Thus, the user can recognize performance of the wireless data network in real time by analyzing the displayed test results. That is, according to the analysis results, the user can recognize whether the mobile communication terminal 10 itself has a problem or a network to which the mobile communication terminal 10 belongs has a problem, and take a suitable step.

Therefore, the apparatus and method for checking performance of a wireless data network may be implemented such that, in order to facilitate checking of performance of various applications such as a Web browser of a mobile communication terminal without using a performance checking device, the FTP module may be installed and test results of data transmission and reception through the FTP module may be displayed.

As so far described, the apparatus and method for checking performance of the wireless data network of the present invention has such an advantage that by displaying the test results of data transmission and reception through the FTP module, performance of the wireless data network can be checked in real time without using a performance checking device.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses, if used, are intended to cover the structure described herein as performing the recited function and not only structural equivalents but also equivalent structures.

## Claims

1. An apparatus for checking performance of a wireless data network comprising:
an FTP (File Transport Protocol) module to couple to a test server based on predetermined user information and to transmit and receive data to and from the coupled test server;
a controller to analyze the transmitted and received data and to output a test result calculated by the controller; and
an output unit to display the outputted test result through a display unit.

2. The apparatus of claim 1, wherein the predetermined user information includes an IP (Internet Protocol) address of the test server, an ID and a password of a user corresponding to the test server, a size of a file for transmission, and a transmission method of the file.

3. The apparatus of claim 2, wherein the transmission method of the file is downloading or uploading.

4. The apparatus of claim 1, wherein the FTP module is installed in a mobile communication terminal.

5. The apparatus of claim 4, wherein the mobile communication terminal is one of a mobile phone a PDA (Personal Digital Assistant), and a notebook computer.

6. The apparatus of claim 1, wherein the test result includes at least one of a transmission time, an average transmission rate, a reference transmission rate, and a maximum/minimum transmission rate.

7. The apparatus of claim 1, wherein the display unit is an LCD (Liquid Crystal Display).

8. A method for checking performance of a wireless network comprising:
driving an FTP module of a mobile communication terminal;
coupling to a test server based on predetermined user information through the driven FTP module;
transmitting and receiving data to and from the coupled test server and
calculating a test result based on the transmitted and received data; and
displaying the calculated test result on a display unit.

9. The method of claim 8, wherein the predetermined user information includes an IP (Internet Protocol) address of the test server, an ID and a password of a user corresponding to the test server, a size of a file for transmission, and a transmission method of the file.

10. The method of claim 9, wherein the transmission method of the file is downloading or uploading.

11. The method of claim 8, wherein, in the step of coupling to the test server, if the predetermined user information is used, the test server is coupled based on the predetermined user information.

12. The method of claim 8, wherein, in the step of coupling to the test server, if the predetermined user information is not used, user information is received from a user so as to be coupled to the test server based on the received user information.

13. The method of claim 8, wherein the mobile communication terminal is one of a mobile phone, a PDA (Personal Digital Assistant), and a notebook computer.

14. The method of claim 8, wherein the test result includes at least one of a transmission time, an average transmission rate, a reference transmission rate, and a maximum/minimum transmission rate.

15. The apparatus of claim 8, wherein the display unit is an LCD (Liquid Crystal Display).
